# EUROPÄISCHE PATENTSCHRIFT

(11) **EP 2 330 882 B1**
(45) Veröffentlichungstag und Bekanntmachung des Hinweises auf die Patenterteilung: **26.09.2012**
(21) Anmeldenummer: 09778852.5
(22) Anmeldetag: 06.10.2009
(51) Int. Cl.: A01C 19/04

(54) **GEZOGENE SÄMASCHINE**
DRAWN SEEDER
SEMOIR TRACTÉ

(30) Priorität: 08.10.2008 DE 102008050783
(43) Veröffentlichungstag der Anmeldung: 15.06.2011
(73) Patentinhaber: Amazonen-Werke H. Dreyer GmbH & Co. KG, 49205 Hasbergen (DE)
(72) Erfinder: FANKHAUSER, Carlos, Fernando, 27798 Haude (DE); HOFFMANN, Karl-Peter, 27798 Hude (DE); STEEN, Rüdiger, 27798 Hude (DE)
(86) Internationale Anmeldenummer: PCT/EP2009/007168
(87) Internationale Veröffentlichungsnummer: WO 2010/040502

(56) Entgegenhaltungen:
- EP-A1- 1 579 754
- US-A- 3 106 998
- US-A- 5 896 966

## Beschreibung

Die Erfindung betrifft eine gezogene Sämaschine gemäß des Oberbegriffes des Patentanspruches 1.

Eine derartige gezogene Sämaschine ist beispielsweise durch den Prospekt Amazone DMC Primera mit Druckvermerk MI 012 / D 675 (D) 10.05 oder aus dem Dokument US 5896 966 bekannt. Diese als Direktsämaschine ausgebildete Verteilmaschine weist einen Tragrahmen auf, an dem über Parallelogrammlenker angelenkte und mittels Hydraulikzylinder aushebbare Säschare angeordnet sind. Diesen Säscharen wird aus dem Vorratsbehälter der Sämaschine über mit einem Förderluftstrom beaufschlagten Verteilerleitungen das Material zugeleitet. Dieses Material wird in einstellbaren Mengen über angetriebene Dosiereinrichtungen in die Förderleitungen eingespeist. Um die Dosiervorrichtungen anzutreiben, ist ein auf einem Laufrad des Fahrwerkes abrollendes Antriebsrad vorgesehen, welches über eine Antriebsvorrichtung, die Antriebswellen aufweist, angetrieben wird. Um die Dosiervorrichtung abzuschalten, damit kein Material mehr in die Förderleitungen eingespeist wird, kann das auf dem Laufrad abrollende Antriebsrad über eine von einem Hydraulikzylinder betätigte Abschalteinrichtung von diesem abgehoben werden.

Der Antrieb der Dosiereinrichtung über ein auf dem Laufrad abrollendes Antriebsrad und die bewegliche Anlenkung dieses Antriebsrades sowie das Anheben des Antriebsrades vom Laufrad, sowie das Drücken des Antriebsrades gegen das Laufrad mittels eines separaten Hydraulikzylinders ist relativ aufwendig und nimmt einen entsprechenden Bauraum in Anspruch.

Der Erfindung liegt die Aufgabe zugrunde, die Abschalteinrichtung für den Antrieb der Dosiervorrichtung wesentlich einfacher und kompakter zu gestalten.

Diese Aufgabe wird erfindungsgemäß durch die kennzeichnenden Merkmale des Patentanspruches 1 gelöst. Infolge dieser Maßnahmen wird die Abschalteinrichtung der Antriebswelle, die geteilt ausgebildet ist, zugeordnet. Über das Schiebekupplungselement der erfindungsgemäßen Abschalteinrichtung können die beiden Wellenabschnitte der Antriebswelle kraftschlüssig oder formschlüssig miteinander gekuppelt werden. Durch entsprechendes Verschieben des Schiebekupplungselementes sind die beiden Antriebwellen auch zu trennen, so dass der Antrieb der Dosiervorrichtung zu unterbrechen ist. Dadurch, dass das Schiebekupplungselement der Kolben es die Abschalteinrichtung betätigendes Hydraulikzylinders ist, ergibt sich eine einfache und kompakte Ausgestaltung der Abschalteinrichtung.

Eine äußerst kompakte Ausgestaltung der Abschalteinrichtung lässt sich dadurch erreichen, dass das Schiebekupplungselement in axialer Richtung der zu kuppelnden Wellen verschiebbar auf zumindest einer der zu kuppelnden Wellen angeordnet ist.

Eine einfache Lagerung der Antriebswellenabschnitte der geteilten Antriebswelle lässt sich in kompakter und einfacher Weise dadurch erreichen, dass das Schiebekupplungselement in axialer Richtung der zu kuppelnden Wellen verschiebbar auf zumindest einer der zu kuppelnden Wellen angeordnet ist.

Eine einfache Ausgestaltung des die Abschalteinrichtung bildenden Hydraulikzylinders lässt sich dadurch erreichen, dass die Enden der miteinander zu kuppelnden Wellen den jeweiligen Abschluss der Hubräume des doppeltwirkenden Hydraulikzylinders bilden.

Weitere Einzelheiten der Erfindung sind den Zeichnungen zu entnehmen. Hierbei zeigen
- Fig. 1: den Hydraulikschaltplan einer gezogenen Sämaschine für das Ausheben der Säschare und der Abschalteinrichtung für den Antrieb der Dosiervorrichtung, wobei der Dosierantrieb eingekuppelt ist, in Prinzipdarstellung,
- Fig. 2: den Hydraulikschaltplan einer gezogenen Sämaschine für das Ausheben der Säschare und der Abschalteinrichtung für den Antrieb der Dosiervorrichtung, wobei der Dosierantrieb ausgekuppelt ist, in Prinzipdarstellung und
- Fig. 3: die Abschalteinrichtung im Schnitt.

In bekannter und nicht dargestellter Weise weist eine gezogene Sämaschinen einen Tragrahmen auf. An diesem Tragrahmen sind im hinteren Bereich auf den Boden abrollende Laufräder, die die Maschine teilweise tragen, und auf der Vorderseite des Tragrahmens eine Zugdeichsel angeordnet, über die die Maschine in gezogener und lasttragender Weise an eine Zugvorrichtung eines Ackerschleppers ankuppelbar ist. Auf dem Tragrahmen ist zumindest ein Vorratsbehälter zur Ausbringung von Materialien, wie Saatgut und Dünger angeordnet. Diesem Vorratsbehälter ist eine angetriebene Dosiereinrichtung zugeordnet, über welche das sich im Vorratsbehälter jeweils befindliche Material in Förderleitungen eingespeist wird, die zu an dem Tragrahmen angeordneten Säscharen führen. Diese Säschare sind mittels höhenbeweglich angeordneten Lenkern am Tragrahmen der Maschine angeordnet. Des weiteren sind die Säschare über den Lenkern zugeordneten Hydraulikzylindern in eine Arbeitsstellung absenkbar und in eine Nichtarbeitsstellung anhebbar.

Des weiteren wird die Dosiereinrichtung, wie bereits erwähnt, von einer Antriebswellen aufweisenden Kraftquelle angetrieben.

Dieser Antriebsvorrichtung ist eine Abschalteinrichtung 1, welche über einen Hydraulikzylinder 2 betätigt wird, zum Einzuschalten und Abzuschalten der Dosiereinrichtung zugeordnet.

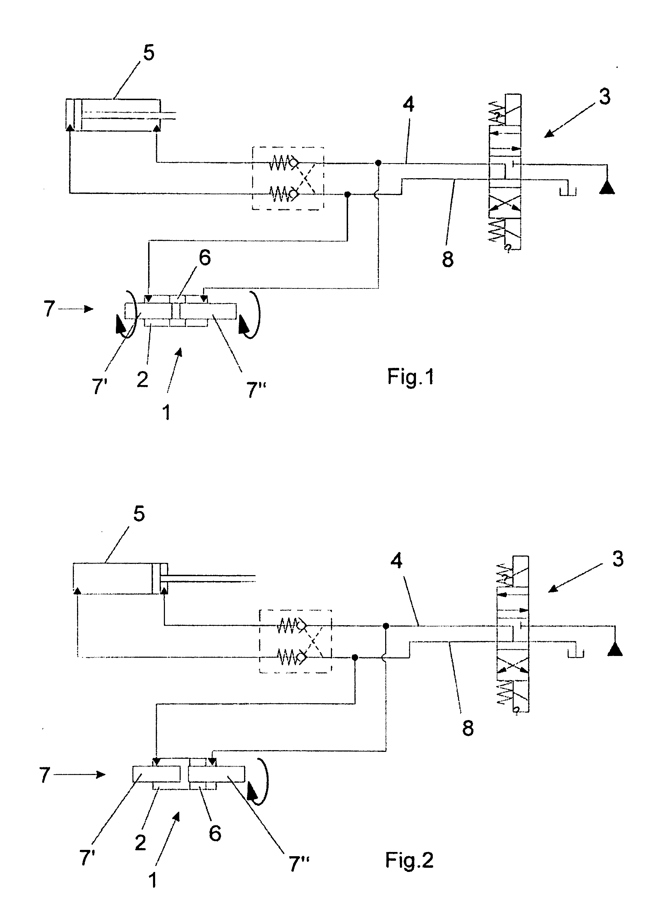

In Fig. 1 ist der Hydraulikschaltplan zum Ausheben und Absenken der Säschare, sowie zum Ein- und Ausschalten des Antriebes der Dosiervorrichtung dargestellt.

Wenn durch Umschalten des Umschalthydraulikventils 3 die in der Fig. 1 obere Leitung 4 mit Druck beaufschlagt wird, werden über den Hydraulikzylinder 5 die Säschare abgesenkt und die Schiebehülse 6 der Abschalteinrichtung 1, die weiter unten näher erklärt wird, in die in Fig. 1 dargestellte Position geschoben, so dass die beiden Hälften 7' und 7" der geteilten Antriebswelle 7 über die Schiebehülse 6 kraft- und formschlüssig miteinander gekuppelt sind, so dass von dem Antrieb über die Antriebswelle 7 die Dosiereinrichtung angetrieben wird.

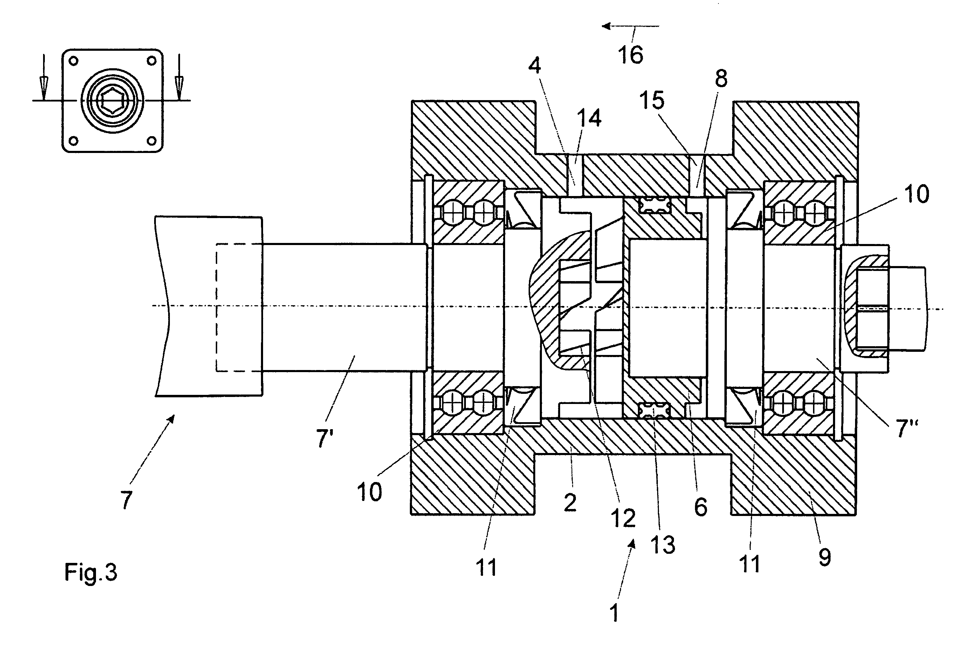

Wenn die Säschare ausgehoben werden sollen und somit die Dosiereinrichtung über die Abschalteinrichtung 1 ausgekuppelt werden soll, d.h. die kraftschlüssige und formschlüssige Verbindung der Antriebswellen 7, 7', 7" getrennt werden, wird durch Umschalten des Hydraulikventils 3 die untere Leitung 8 mit Druck beaufschlagt, so dass über die Hydraulikzylinder 5 die Säschare ausgehoben und die Schiebehülse 6 in die in Fig. 2 und 3 dargestellte Position verschoben wird.

Im folgenden wird die Abschalteinrichtung 1 anhand der Fig. 3 näher erläutert.

Die Abschalteinrichtung 1 weist ein Gehäuse 9 auf. An jedem Ende des Gehäuses 9, welches in seinem Innenraum zylinderförmig ausgestaltet ist, ist jeweils mittels eines Lagers 10 jeweils ein Ende der miteinander zu verkuppelnden Wellen 7', 7" gelagert. Über die Dichtungen 11 sind die Wellen 7', 7" gegenüber dem Innenraum des zylinderförmigen Gehäuses 9 abgedichtet. Von der rechten Seite wird der eine Teil 7' der geteilten Antriebswelle 7 von einer Kraftquelle rotierend angetrieben. Das andere Teil 7" der geteilten Antriebswelle 7 ist mit der Dosiervorrichtung verbunden.

Im Ausführungsbeispiel weist das Ende 12 der abtreibenden Welle 7' ein erstes Teil der Kupplung auf. Auf dem Ende der angetriebenen Welle 7", die über die Dichtung 11 in den Innenraum des Zylinders 9 hineinragt, ist über eine Formschlussverbindung die Schiebehülse 6 angeordnet. Die Schiebehülse 6 ist über die Dichtung 13 gegenüber dem Zylinderinnenraum abgedichtet. Die Schiebehülse 6 bildet den Kolben des Hydraulikzylinders 2 der Abschalteinrichtung 1, während das Gehäuse 9 der Abschalteinrichtung 1 das Zylinderelement des Hydraulikzylinders 2 bildet.

In dem vom Gehäuse gebildeten Zylinderelement sind die beiden Bohrungen 14 und 15 angeordnet, die über nicht dargestellte Anschlussvorrichtungen mit den Hydraulikleitungen 4 und 8 der in den Fig. 1 und 2 dargestellten Hydraulikanlage verbunden sind.

Die Schiebehülse 6 gemäß Fig. 3 ist in der Abschaltposition der Abschaltvorrichtung 1 gemäß Fig. 2 dargestellt. Wenn über die Leitung 8 und den Anschluss 15 der Zylinderraum mit Druck beaufschlagt wird, wird über die Hydraulikflüssigkeit das Schiebeelement 6 in Pfeilrichtung 16 verschoben, so dass es die in Fig. 1 dargestellte Position einnimmt. Hierbei kuppeln die Kupplungselemente der Schiebehülse 6 in die Kupplungselemente der abtreibenden Welle 7' ein. Hierdurch ist dann die angetriebene Welle 7" mit der abtreibenden Welle 7' über die Schiebehülse 6, die den Kolben des Hydraulikzylinders der Abschalteinrichtung 1 bildet kraft- und formschlüssig miteinander verbunden.

Somit ist das Schiebekupplungselement 6 der Kolben des die Abschalteinrichtung 1 betätigenden Hydraulikzylinders 2. Weiterhin bilden die Enden der miteinander zu kuppelnden Wellen 7', 7", den jeweiligen Abschluss der Hubräume des doppeltwirkenden Hydraulikzylinders 2.

## Patentansprüche

1. Gezogene Sämaschine mit
- einem Tragrahmen,
- auf dem Boden abrollenden Laufrädern,
- zumindest einer von den Laufrädern über eine Antriebsvorrichtung angetriebenen Dosiervorrichtung, wobei der Antriebsvorrichtung eine als einen Kolben aufweisenden Hydraulikzylinder (2) ausgebildete Abschalteinrichtung (1) zur Unterbrechung des Antriebswellen (7', 7") aufweisenden Antriebes (7) der Dosiervorrichtung zugeordnet ist,
- an dem Tragrahmen über eine hydraulische Aushebeeinrichtung (5) anheb- und absenkbare Säschare,
wobei bei Betätigen der hydraulischen Aushebeinrichtung (5) die Abschalteinrichtung (1) über den Hydraulikzylinder (2) schaltbar ist,
wobei
- die Antriebsvorrichtung der Dosiervorrichtung mittels eines Schiebekupplungselementes (6) kraftschlüssig oder formschlüssig miteinander zu kuppelnde Antriebswellen (7', 7") aufweist,
- das Schiebekupplungselement (6) der Kolben des die Abschalteinrichtung (1) betätigenden Hydraulikzylinders (2) ist.

2. Sämaschine nach Anspruch 1, **dadurch gekennzeichnet, dass** das Schiebekupplungselement (6) in axialer Richtung der zu kuppelnden Wellen (7', 7") verschiebbar auf zumindest einer der zu kuppelnden Wellen (7") angeordnet ist.

3. Sämaschine nach Anspruch 1, **dadurch gekennzeichnet, dass** die zu kuppelnden Wellen (7', 7") mittels Lagerelemente (10) in dem als Gehäuse (9) ausgebildeten Zylinderelement des Hydraulikzylinders (2) gelagert sind.

4. Sämaschine nach einem oder mehreren der vorstehenden Ansprüche, **dadurch gekennzeichnet, dass** die Enden der miteinander zu kuppelnden Wellen (7', 7") den jeweiligen Abschluss der Hubräume des doppeltwirkenden Hydraulikzylinders (2) bilden.

## Claims

1. Drawn seed drill having
- a support frame,
- running wheels that roll on the ground,
- at least one metering means that is driven by the running wheels via a drive means, wherein the drive means is assigned a switch-off device (1), which is in the form of a hydraulic cylinder (2) having a piston, for interrupting the drive (7), which has drive shafts (7', 7"), of the metering means,
- sowing coulters which are raisable and lowerable on the support frame via a hydraulic lifting device (5),
wherein, when the hydraulic lifting device (5) is actuated, the switch-off device (1) is switchable via the hydraulic cylinder (2),
wherein
- the drive means of the metering means has drive shafts (7', 7") that are to be coupled together in a force-fitting or form-fitting manner by means of a sliding coupling element (6),
- the sliding coupling element (6) is the piston of the hydraulic cylinder (2) that actuates the switch-off device (1).

2. Seed drill according to Claim 1, **characterized in that** the sliding coupling element (6) is arranged so as to be slidable on at least one of the shafts (7") to be coupled, in the axial direction of the shafts (7', 7") to be coupled.

3. Seed drill according to Claim 1, **characterized in that** the shafts (7', 7") to be coupled are supported by means of bearing elements (10) in the cylinder element, in the form of a housing (9), of the hydraulic cylinder (2).

4. Seed drill according to one or more of the preceding claims, **characterized in that** the ends of the shafts (7', 7") to be coupled together form the respective termination of the swept volumes of the double-acting hydraulic cylinder (2).

## Revendications

1. Semoir tracté, comprenant
- un cadre de support,
- des roues de roulement roulant sur le sol,
- au moins un dispositif de dosage entraîné par les roues de roulement au moyen d'un dispositif d'entraînement, un dispositif de déconnexion (1) réalisé sous forme de cylindre hydraulique (2) comprenant un piston étant associé au dispositif d'entraînement pour interrompre l'entraînement (7), comprenant des arbres d'entraînement (7', 7"), du dispositif de dosage,
- des socs de semoir sur le cadre de support qui peuvent être soulevés et abaissés au moyen d'un dispositif de soulèvement hydraulique (5),
le dispositif de déconnexion (1) pouvant être connecté au moyen du cylindre hydraulique (2) lors de l'actionnement du dispositif de soulèvement hydraulique (5),
- le dispositif d'entraînement du dispositif de dosage comprenant des arbres d'entraînement (7', 7") à accoupler l'un à l'autre par engagement par force ou par complémentarité de formes au moyen d'un élément d'accouplement coulissant (6),
- l'élément d'accouplement coulissant (6) étant le piston du cylindre hydraulique (2) actionnant le dispositif de déconnexion (1).

2. Semoir selon la revendication 1, **caractérisé en ce que** l'élément d'accouplement coulissant (6) est disposé sur au moins un des arbres à accoupler (7") de manière coulissante dans la direction axiale des arbres à accoupler (7', 7'').

3. Semoir selon la revendication 1, **caractérisé en ce que** les arbres à accoupler (7', 7") sont montés au moyen d'éléments de palier (10) dans l'élément de cylindre du cylindre hydraulique (2) réalisé sous forme de boîtier (9).

4. Semoir selon l'une quelconque ou plusieurs des revendications précédentes, **caractérisé en ce que** les extrémités des arbres à accoupler l'un à l'autre (7', 7") forment la fermeture respective des cylindrées du cylindre hydraulique à double action (2).
